# EUROPEAN PATENT APPLICATION

(11) **EP 4 645 557 A1**
(43) Date of publication of application: **05.11.2025**
(21) Application number: 23911449.9
(22) Date of filing: 20.11.2023
(51) Int. Cl.: H01M 50/284, H01M 10/48, H01M 50/213, H01M 50/291, H01M 50/503, H01M 50/505, H01M 50/516, H01M 50/569

(54) **BATTERY PACK AND PRODUCTION METHOD FOR SAME**

(30) Priority: 26.12.2022 JP 2022208968
(71) Applicant: Panasonic Energy Co., Ltd., Osaka 570-8511 (JP)
(72) Inventor: MATSUBARA, Shota, Osaka 571-0057 (JP); KATAOKA, Yuma, Osaka 571-0057 (JP)
(74) Representative: Eisenführ Speiser
(86) International application number: PCT/JP2023/041689
(87) International publication number: WO 2024/142667

(57) **Abstract**

The present disclosure enables easy connection between a circuit board and a battery pack. The battery pack 100 includes a battery holder 20 that holds a plurality of secondary battery cells 1 and a plurality of lead plates 30, a circuit board 40 having a rectangular shape with a pair of edges and a pair of side faces intersecting the pair of edges and including a plurality of electrical connection regions 42 for respectively connecting to the plurality of lead plates 30, and a pair of guide walls 23, which is disposed on one face of the battery holder 20 and forms a slot 28 in which the circuit board 40 is inserted by respectively guiding the pair of side faces of the circuit board 40. Each of the plurality of lead plates 30 includes a bending piece 32 that is to be bent and connected to each of the electrical connection regions 42 of the circuit board 40. The bending piece 32 is connected to each of the plurality of electrical connection regions 42 in a state where the circuit board 40 is inserted into the slot 28 to electrically connect the plurality of lead plates 30 to the circuit board 32.

## Description

### TECHNICAL FIELD

The present disclosure relates to a battery pack and a production method for the same.

### BACKGROUND ART

A battery pack containing a plurality of secondary battery cells stored in an outer case has been used to drive an electrical device by a rechargeable secondary battery, such as a lithium-ion secondary battery (e.g., Patent Literature 1). Such a battery pack includes a battery holder that stores the secondary battery cells and a circuit board on which a charging/discharging circuit, a protection circuit, and the like, for the secondary battery cells are mounted. The plurality of secondary battery cells are connected in series or in parallel by a lead plate, which is a metal plate. Further, the plurality of secondary battery cells are electrically connected to the circuit board so that the intermediate potential and the total potential of the secondary battery cells can be detected by the circuit board.

However, the burden in securing the circuit board to the battery holder has been problematic. For example, in the case of a plurality of secondary battery cells connected in series, it is necessary to electrically connect a plurality of lead plates individually to the circuit board in order to detect intermediate potentials. Accordingly, it becomes necessary to connect lead wires, lead pins, and the like, drawn from the lead plates to the circuit board, making the structure and the assembly process more complicated.

### CITATION LIST

### PATENT LITERATURE

Patent Literature 1: Japanese Unexamined Patent Application Publication No. 2013-247100

### SUMMARY OF INVENTION

### TECHNICAL PROBLEM

One object of the present disclosure is to provide a battery pack that enables easy connection between the circuit board and the battery pack, as well as a production method for the same.

### SOLUTION TO PROBLEM

A battery pack according to one embodiment of the present disclosure includes a plurality of secondary battery cells, a plurality of lead plates that connect the plurality of secondary battery cells in series and/or in parallel, a battery holder that holds the plurality of secondary battery cells and the plurality of lead plates, a circuit board having a rectangular shape with a pair of edges and a pair of side faces intersecting the pair of edges, and including a plurality of electrical connection regions for respectively connecting to the plurality of lead plates, and a pair of guide walls, which is disposed on one face of the battery holder and forms a slot in which the circuit board is inserted by respectively guiding the pair of side faces of the circuit board. Each of the plurality of lead plates includes a bending piece that is to be bent and connected to each of the electrical connection regions of the circuit board, and the bending piece is connected to each of the plurality of electrical connection regions in a state where the circuit board is inserted into the slot to electrically connect the plurality of lead plates to the circuit board.

Further, a production method for a battery pack according to another embodiment of the present disclosure is a method for producing a battery pack including a plurality of secondary battery cells, a plurality of lead plates that connect the plurality of secondary battery cells in series and/or in parallel, the plurality of lead plates including bending pieces that are bent in advance, a battery holder that holds the plurality of secondary battery cells and the plurality of lead plates, and a circuit board having a rectangular shape with a pair of edges and a pair of side faces intersecting the pair of edges, the circuit board including a plurality of electrical connection regions for respectively connecting to the plurality of lead plates. The method includes a step of securing a covering face of each of the plurality of lead plates to a pair of assembly side faces of a battery assembly in which the plurality of secondary battery cells stored in the battery holder are stacked, the pair of assembly side faces respectively exposing end faces of the plurality of secondary battery cells on the same plane, a step of inserting the circuit board into a slot, which is formed on one face of the battery holder and allows a pair of side faces of the circuit board to be guided by guide walls to be slidable, and bringing the bending pieces of the lead plates to face the plurality of electrical connection regions, and a step of connecting each of the bending pieces to each of the battery connection regions.

### ADVANTAGEOUS EFFECTS OF INVENTION

A battery pack according to one embodiment of the present disclosure makes it possible to attach the circuit board to the battery holder by inserting the circuit board into the slot along the guide walls, and also set positions of the lead plate and the circuit board to establish electrical connection between them.

### BRIEF DESCRIPTION OF DRAWINGS

FIG. 1 is a perspective view of a battery pack according to Embodiment 1;
FIG. 2 is an exploded perspective view of the outer case of FIG. 1;
FIG. 3 is a perspective view of the battery holder of FIG. 2;
FIG. 4 is a plan view of the battery holder of FIG. 3;
FIG. 5 is a vertical cross-sectional view of the battery holder of FIG. 4 taken along the line V-V;
FIG. 6 is an exploded perspective view with the circuit board removed from the battery holder of FIG. 3;
FIG. 7 is an exploded perspective view of the battery holder of FIG. 6;
FIG. 8 is a perspective view of a lead plate;
FIG. 9 is a cross-sectional perspective view of the battery pack of FIG. 2 taken along the line IX-IX;
FIG. 10 is a perspective view of a battery pack according to a comparative example;
FIG. 11 is an exploded perspective view of a battery pack according to another comparative example;
FIG. 12 is a perspective view showing a bending step of a lead plate of the battery pack shown in FIG. 11;
FIG. 13 is a cross-sectional perspective view of the battery holder of FIG. 4 taken along the line XIII-XIII;
FIG. 14 is a horizontal cross-sectional view of the battery holder of FIG. 6 taken along the line XIV-XIV;
FIG. 15 is a horizontal cross-sectional view of the battery holder of FIG. 4 taken along the line XV-XV;
FIG. 16 is a horizontal cross-sectional view of a battery pack according to Embodiment 2;
FIG. 17 is a vertical cross-sectional view showing a state in which the circuit board of the battery pack of FIG. 16 is inserted into a slot of a battery holder; and
FIG. 18 is a vertical cross-sectional view showing a state in which the circuit board of the battery pack according to a modification example is inserted into a slot of a battery holder.

### DESCRIPTION OF EMBODIMENTS

The embodiments of the present disclosure may be specified by the following configurations and features.

A battery pack according to another embodiment of the present disclosure is as recited in the preceding embodiment, wherein each of the plurality of secondary battery cells has a cylindrical shape with different electrodes on a pair of end faces. Each of the plurality of lead plates includes a covering face that partially covers a pair of assembly side faces of a battery assembly in which the plurality of secondary battery cells are stacked. The pair of assembly side faces respectively exposing end faces of the plurality of secondary battery cells on the same plane, the bending piece is bent from the covering face to be exposed. The bending piece is connected to each of the electrical connection regions of the circuit board. With this configuration in which the bending piece of each lead plate is secured to each electrical connection region by inserting the circuit board into the slot with the bending piece bent in advance, it is possible to perform easy positioning between the lead plate and the circuit board to establish electrical connection between them.

Further, a battery pack according to another embodiment of the present disclosure is as recited in any preceding embodiments, wherein the battery holder includes a battery storage unit that stores the plurality of secondary battery cells, and the circuit board is attached to an upper face of the battery storage unit.

Further, a battery pack according to another embodiment of the present disclosure is as recited in any preceding embodiments, wherein the guide walls are formed integrally with the battery holder.

Further, a battery pack according to still another embodiment of the present disclosure is as recited in any preceding embodiments, wherein each of the guide walls includes a guide L formed in an L-shape so as to cover from a pair of side faces to an upper face of the circuit board, and a lead window is opened in the guide L to expose the bending piece. With this configuration, the bending piece of each lead plate can be exposed through the lead window with the circuit board inserted into the slot, allowing a securing operation such as welding to be performed on the electrical connection region.

A battery pack according to still another embodiment of the present disclosure is as recited in any preceding embodiments, wherein an attachment unit that covers another edge of the circuit board in a state where the circuit board is inserted into the slot. This configuration allows the circuit board to be inserted into the slot and positioned with one edge of the circuit board in contact with the attachment unit.

Further, a battery pack according to still another embodiment of the present disclosure is as recited in any preceding embodiments, wherein the attachment unit is formed into an eave shape projecting to the upper face of the battery storage unit, and the circuit board is configured such that the attachment unit having the eave shape covers the another edge to a part of the upper face of the circuit board in a state where the circuit board is inserted into the slot. With this configuration, the circuit board can be held with its edge caught under the eave-shaped attachment unit.

Further, a battery pack according to still another embodiment of the present disclosure is as recited in any preceding embodiments, wherein the bending piece of each of the lead plates is bent elastically from the covering face. This configuration enables the lead plate to be more easily connected to the electrical connection region of the circuit board in a state where the circuit board is inserted along the guide walls and attached to the battery holder.

Further, a battery pack according to still another embodiment of the present disclosure is as recited in any preceding embodiments, wherein the bending piece of each of the lead plates is bent at an angle of 70° to 90° with respect to the covering face.

Further, a battery pack according to still another embodiment of the present disclosure is as recited in any preceding embodiments, wherein each of the plurality of electrical connection regions includes an intermediate potential connection region, which is connected to one of the plurality of lead plates and detects an intermediate potential of the plurality of secondary battery cells, and a total potential connection region, which is connected to another one of the plurality of lead plates and detects a total potential of the plurality of secondary battery cells.

Further, a production method for a battery pack according to still another embodiment of the present disclosure is as recited in any preceding embodiments, wherein the step of inserting the circuit board into the slot and bringing the bending pieces to face the plurality of electrical connection regions includes a step of bringing an edge of the circuit board into contact with an attachment unit, which is disposed to intersect the pair of guide walls, to perform relative positioning of the circuit board and the battery holder so that the electrical connection regions and the bending pieces are disposed in an overlapping manner. This method makes it possible to easily perform positioning of the circuit board and the battery holder so that the bending piece and the electrical connection region are disposed in an overlapping manner.

Further, a production method for a battery pack according to still another embodiment of the present disclosure is as recited in any preceding embodiments, wherein in the step of inserting the circuit board between the pair of guide walls, upper ends of the plurality of lead plates are elastically bent above a path along which the circuit board is inserted between the pair of guide walls, and, in the step of electrically connecting the plurality of electrical connection regions and the lead plates that are disposed in the overlapping manner, the upper ends of the lead plates are pressed to the respective electrical connection regions with a jig. This method allows each lead plate to be easily electrically connected to the circuit board.

Further, a production method for a battery pack according to still another embodiment of the present disclosure is as recited in the preceding embodiment, wherein each of the bending pieces of the lead plates is bent at an angle of 70° to 90° with respect to the covering face.

Embodiments of the present disclosure are described below with reference to the drawings. However, the embodiments shown below are only examples to illustrate the technical concepts of the present disclosure, and the present disclosure is not limited to these embodiments. Further, this specification does not limit any member in the claims to the members described in these embodiments. In particular, unless otherwise specified, the dimensions, materials, shapes, relative positions, etc. of the components described in these embodiments are intended to be illustrative and not to limit the scope of the present disclosure. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present disclosure may be implemented such that a plurality of elements are formed from the same member, allowing a single member to serve as a plurality of elements, or that, conversely, the function of a single member is shared among a plurality of members.

The battery pack of the present disclosure can be used, for example, as a power source for driving an assist bicycle, a power source for an electric scooter for home delivery and the like, an electric cart for use in locations such as golf courses, factories, and airports, and a self-propelled robot for home delivery, as well as a power source for driving construction machinery or vehicles such as hybrid vehicles and electric vehicles. In addition, the battery pack of the present disclosure can be used as a power source for portable electrical devices, such as radios, electric cleaners, and power tools. Alternatively, for stationary energy storage applications, battery pack of the present disclosure can also be used as a backup power source for servers, as well as a power supply for households, business establishments, and factories. A battery pack used as a power source for driving an assist bicycle is described below as one embodiment of the present disclosure.

### [EMBODIMENT 1]

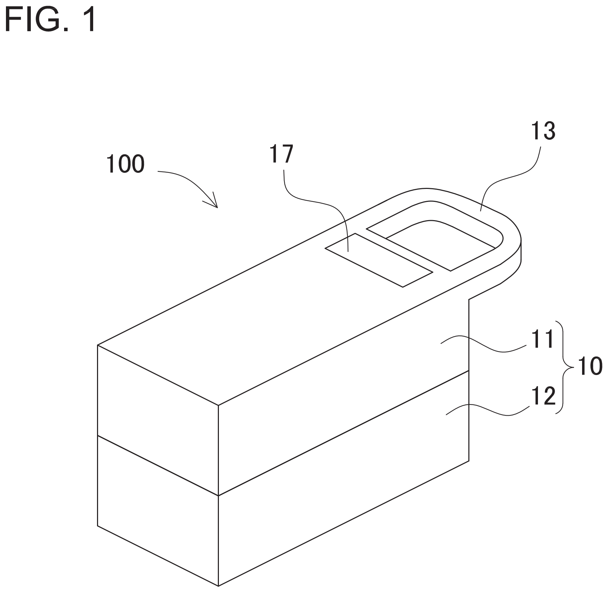

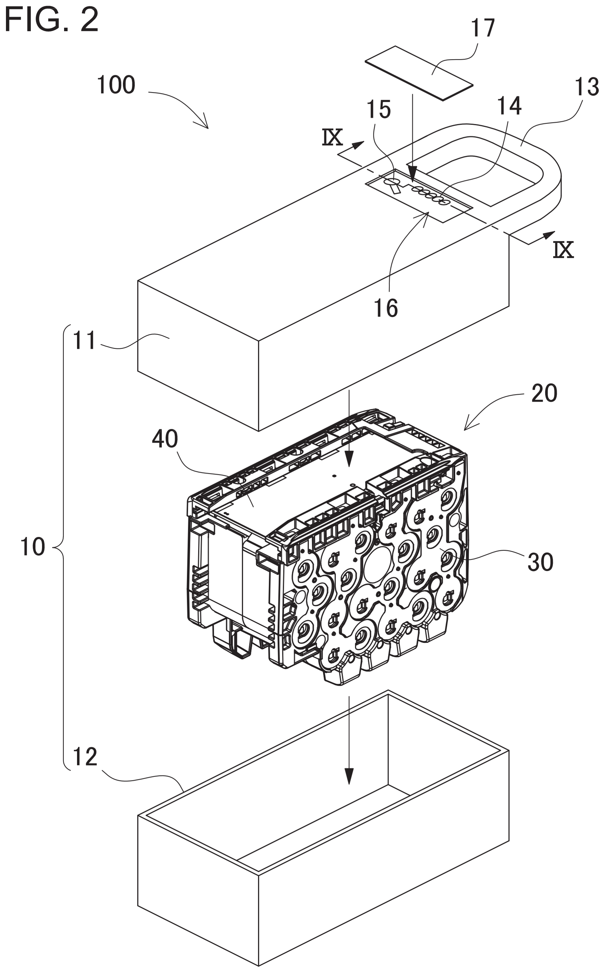

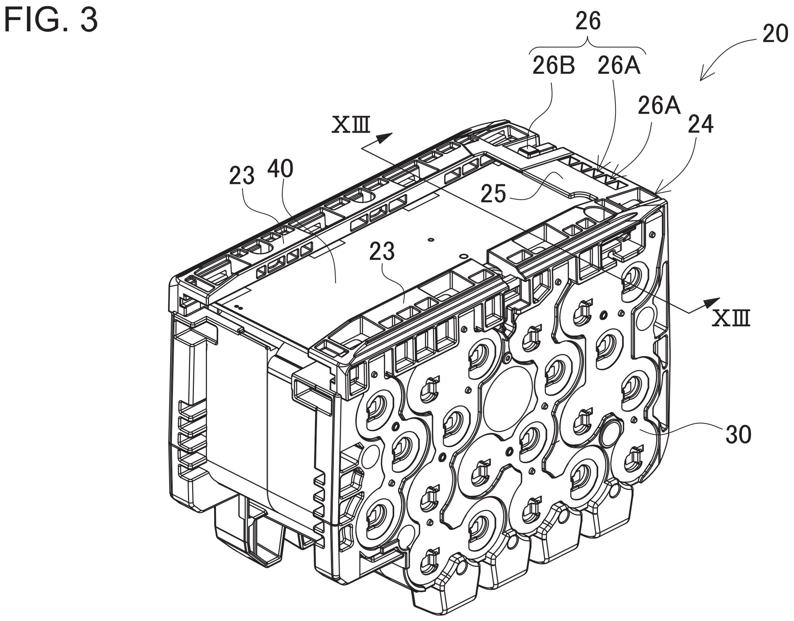

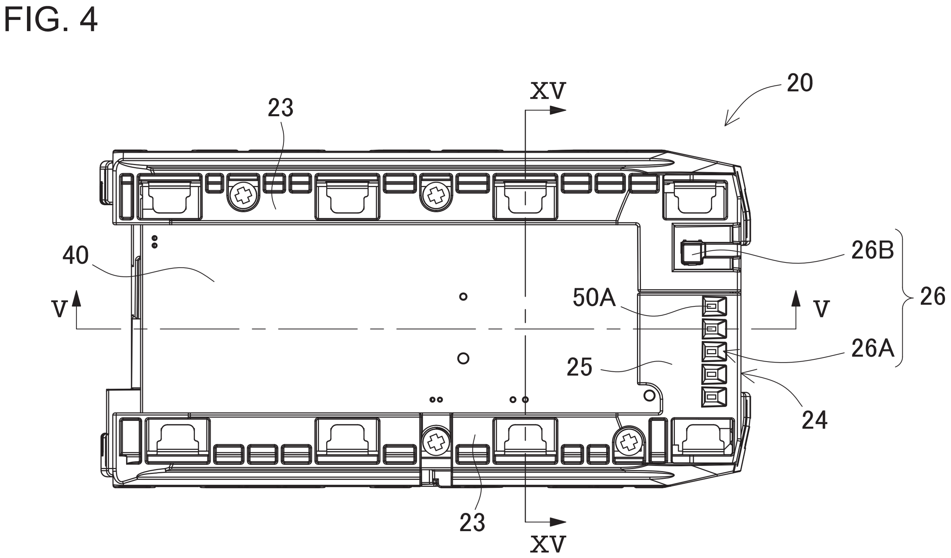

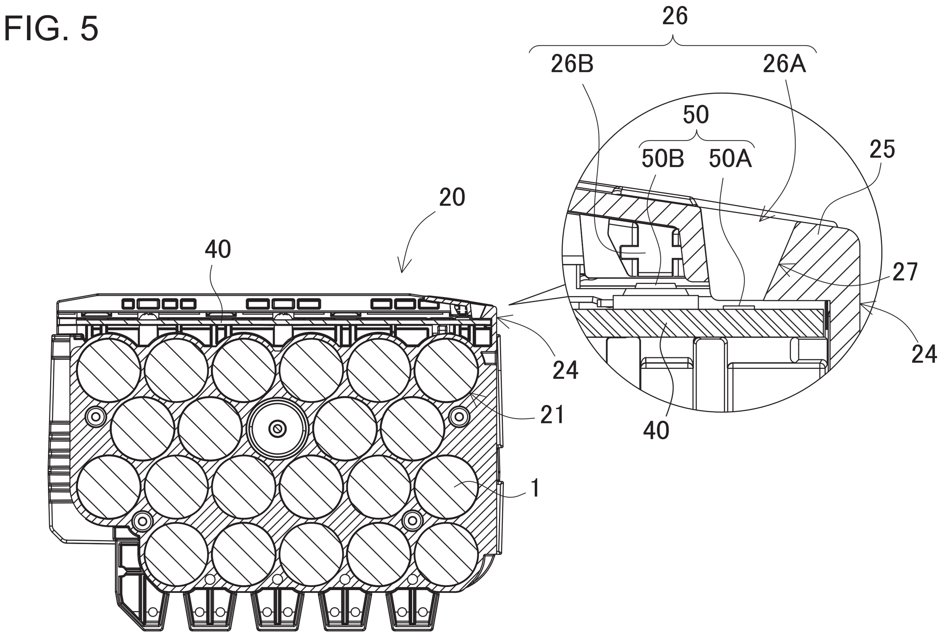

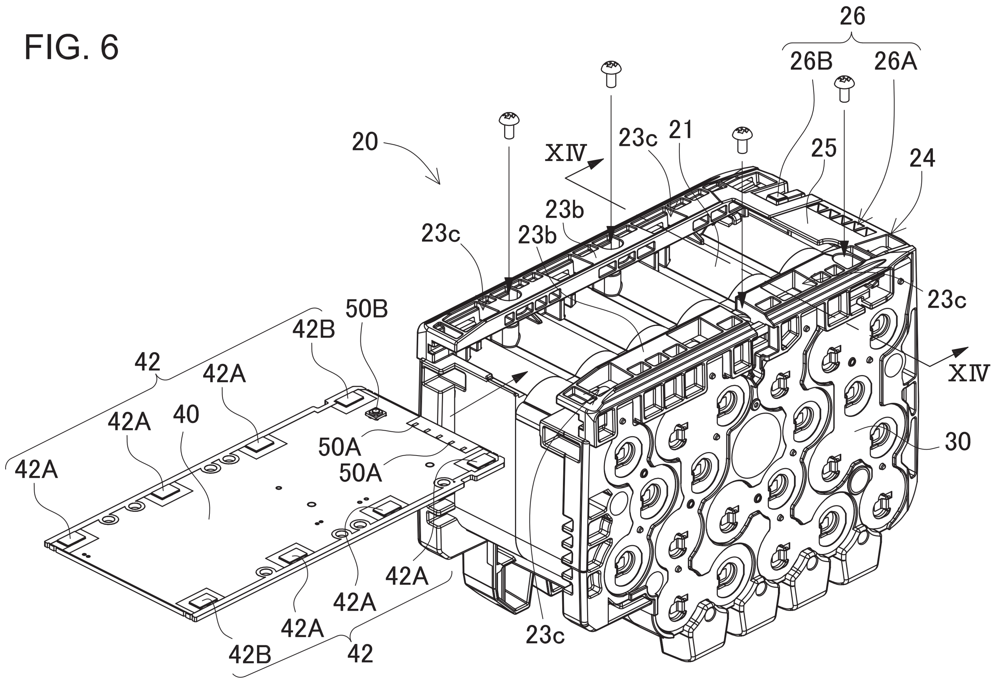

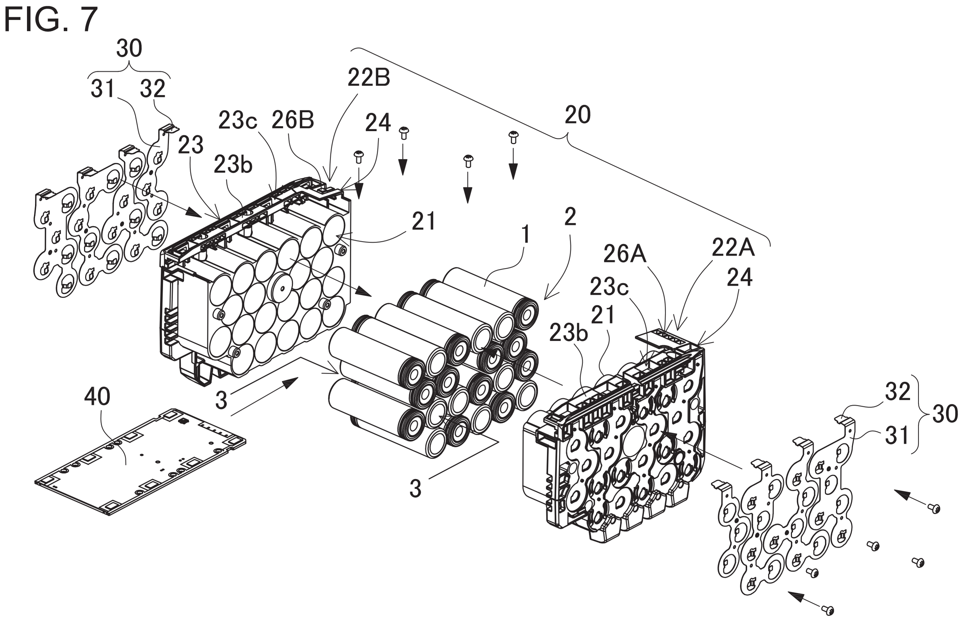

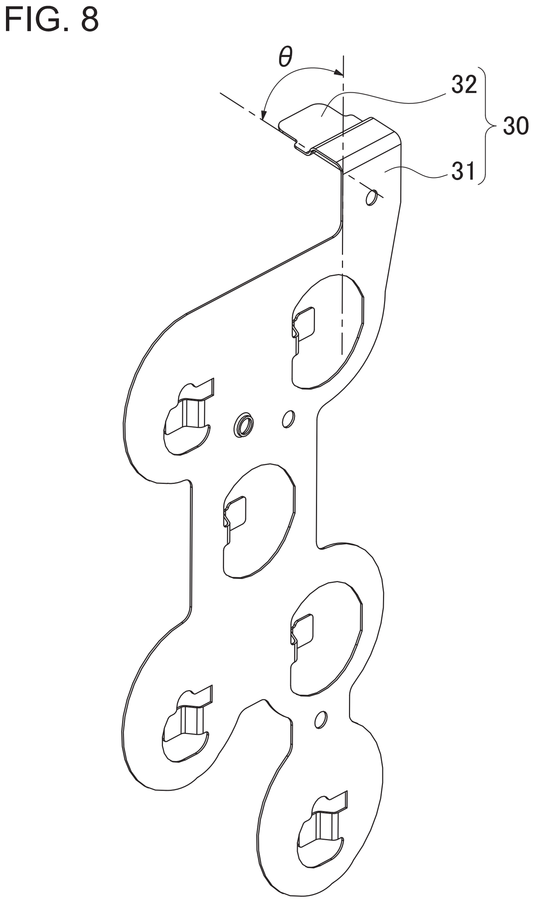

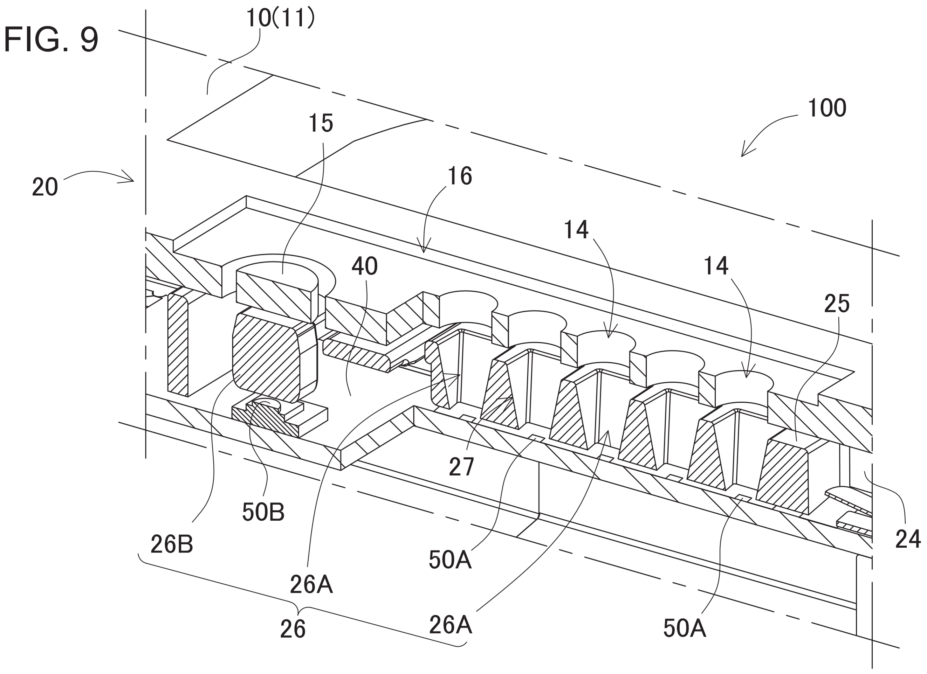

A battery pack 100 according to Embodiment 1 of the present disclosure is shown in FIGs. 1 to 9. In these figures, FIG. 1 is a perspective view of a battery pack 100 according to Embodiment 1, FIG. 2 is an exploded perspective view of an outer case 10 of FIG. 1, FIG. 3 is a perspective view of a battery holder 20 of FIG. 2, FIG. 4 is a plan view of the battery holder 20 of FIG. 3, FIG. 5 is a vertical cross-sectional view of the battery holder 20 of FIG. 4 taken along the line V-V, FIG. 6 is an exploded perspective view with a circuit board 40 removed from the battery holder 20 of FIG. 3, FIG. 7 is an exploded perspective view of the battery holder 20 of FIG. 6, FIG. 8 is a perspective view of a lead plate 30, and FIG. 9 is a cross-sectional perspective view of the battery pack 100 of FIG. 2 taken along the line IX-IX. The battery pack 100 shown in these figures includes one or more secondary battery cells 1, the battery holder 20 that holds the one or more secondary battery cells 1, the circuit board 40 attached to the battery holder 20, and the outer case 10 that stores the battery holder 20 and the circuit board 40.

### (Outer Case 10)

As shown in FIGs. 1 and 2, the outer case 10 is a storage box having a hollow storage space inside. The storage space is formed into a shape and size that allows the battery holder 20 with the circuit board 40 to be stored therein. Further, the exterior of the outer case 10 is shaped according to the storage space. In the example shown in FIG. 1, the outer case 10 has a rectangular shape extending in one direction. The outer case 10 is also divided into two parts, i.e., an upper part and a lower part. In this example, the outer case 10 is divided into an upper case 11 and a lower case 12. Further, a handle 13 is disposed in an upper portion of the outer case 10. Such an outer case 10 can be made of a material having excellent insulating properties, for example, a thermoplastic resin, such as m-PPE (modified polyphenylene ether), ABS resin, PC (polycarbonate), PP (polypropylene), or PBT (polybutylene terephthalate), or a thermosetting resin, such as silicone resin, unsaturated phenolic resin, or unsaturated polyester.

### (Battery Holder 20)

The battery holder 20, which is stored in the outer case 10, holds the one or more secondary battery cells 1. Further, as shown in FIGs. 3 to 6, the battery holder 20 includes the circuit board 40 attached to one face thereof. As shown in FIGs. 3 and 4, the battery holder 20 has an approximately rectangular outer shape, and the circuit board 40 is attached to its upper face. A slot 28 for inserting the circuit board 40 is formed on the upper face of the outer case 10. As shown in FIG. 6, the circuit board 40 is attached to the battery holder 20 by inserting it into the slot 28 from the horizontal direction. Further, the circuit board 40 inserted into the slot 28 is secured by screwing.

### (Battery Storage Unit 21)

The battery holder 20 includes a battery storage unit 21 that stores the one or more secondary battery cells 1. The battery holder 20 shown in FIG. 7 is divided into two parts in the left-right direction, and the battery storage unit 21, which holds the secondary battery cells 1, is formed between divided cases 22A and 22B. Such a battery holder 20 can be made of a material having excellent insulating properties, for example, a thermoplastic resin, such as m-PPE (modified polyphenylene ether), ABS resin, PC (polycarbonate), PP (polypropylene), or PBT (polybutylene terephthalate), or a thermosetting resin, such as silicone resin, unsaturated phenolic resin, or unsaturated polyester.

Each of the secondary battery cells 1 stored in the battery holder 20 has a cylindrical shape, and a plurality of the secondary battery cells 1 horizontally arranged are stacked to form a battery assembly 2. Each assembly side face 3 of the battery assembly 2 exposes each end face of the respective secondary battery cells 1 on the same plane. The secondary battery cells 1 adjacent in the up-down direction are disposed in an offset manner so that their circular end faces are not aligned concentrically. Further, lead plates 30 are disposed on both sides of the battery holder 20. Each lead plate 30 is secured to the end faces of the plurality of secondary battery cells 1 and connects the secondary battery cells 1 in series or in parallel. In the examples of FIGs. 5 and 7, twenty-one secondary battery cells 1 are connected in a 7-series, 3-parallel configuration. The number of the secondary battery cells and the number of series or parallel connections can be appropriately changed according to specifications such as the voltage or capacity required for the battery pack. Further, the posture in which the battery holder 20 holds the secondary battery cells 1 is not limited to the example shown in FIG. 7, etc., and may take any form. For example, in the example of FIG. 7, the battery holder 20 holds the plurality of secondary battery cells 1 in a horizontal posture; however, the battery holder 20 may also hold them in a vertical posture. Further, on the side face of the battery holder 20, the positive and negative electrodes of the secondary battery cells 1 are mixed; however, the positive and negative electrodes may also be disposed so that only the positive electrodes or only the negative electrodes are flush with each other.

### (Secondary Battery Cells 1)

Each of the secondary battery cells 1 has positive and negative electrodes. The positive or negative electrode is preferably disposed on one of the end faces of the secondary battery cells 1. Suitable examples of batteries to be used for the secondary battery cells 1 include known secondary batteries, such as lithium-ion secondary batteries, nickel-metal hydride batteries, or nickel-cadmium batteries.

### (Lead Plate 30)

The lead plate 30 is disposed on the side face of the battery holder 20. The lead plate 30 connects the electrodes on the end faces of the secondary battery cells 1 to each other, thereby connecting the plurality of secondary battery cells 1 in series or in parallel. Each of these lead plates 30 is made of a nickel plate or a metal plate with excellent electrical conductivity, such as aluminum or iron. An insulating plate may be placed on the end face of the lead plate 30, if necessary. The insulating plate is made of a material with excellent insulating property, such as paper or mica.

Each lead plate 30 includes, as shown in FIG. 8, a covering face 31 and a bending piece 32. The covering face 31 partially covers a pair of assembly side faces 3 of the battery assembly 2. The bending piece 32 is bent from the covering face 31 at the upper end of the covering face 31. Each bending piece 32 is connected to an electrical connection region 42 of the circuit board 40. By inserting the circuit board 40 into the slot 28 with the bending piece 32 of the lead plate 30 bent in advance and securing the bending piece 32 to the electrical connection region 42, it is possible to perform easy electrical connection between the lead plate 30 and the circuit board 40.

The connection between the bending piece 32 of the lead plates 30 and the circuit board 40 can be appropriately established using any known connection method, such as welding, weld bonding, or bonding, depending on the required strength, the materials to be connected, and the like. Laser welding and ultrasonic welding are preferable.

### (Circuit Board 40)

The circuit board 40 has a rectangular shape with a pair of edges and a pair of side faces intersecting the pair of edges. The circuit board 40 is electrically connected to the secondary battery cells 1. The circuit board 40 includes a protection circuit and a charging/discharging circuit for the secondary battery cells 1. Further, the circuit board 40 includes an electronic component 50, such as an LED 50A and a switch 50B. The electronic component 50 mounted on the circuit board 40 is a member that can be visually recognized or can be operated by the user from outside of the outer case 10. For example, the LED 50A can be visually recognized by the user from outside of the outer case 10, and the remaining capacity of the secondary battery cells 1 or the charging/discharging status of the secondary battery cells 1 can be shown by the number of a plurality of LEDs 50A lighted. Further, the switch 50B can be operated by the user from the surface of the outer case 10. The switch 50B is provided, for example, to be pressed by the user to allow the user to instruct the display of the remaining capacity. A hard resin such as a glass epoxy substrate is preferably used for such a circuit board 40.

### (Electrical Connection Region 42)

The circuit board 40 includes a plurality of electrical connection regions 42 for enabling connection with a plurality of the lead plates 30. The electrical connection region 42 is a block-shaped region mounted on the circuit board 40. The bending piece 32 of the lead plate 30 is secured to the electrical connection region 42 by resistance welding, laser welding, or the like. Such a block-shaped electrical connection region 42 may be made of a material suitable for welding, such as a metal plated with, for example, aluminum-nickel or iron-nickel, or may otherwise be made of nickel itself, a clad plate, or the like, depending on the material of the lead plate 30. Alternatively, a land pattern formed on the surface of the circuit board may be used as the electrical connection region.

The electrical connection region 42 includes an intermediate potential connection region 42A and a total potential connection region 42B. The intermediate potential connection region 42A is connected to at least one of the plurality of lead plates 30 and detects an intermediate potential of the plurality of secondary battery cells 1. The total potential connection region 42B is connected to another one of the plurality of lead plates 30 and detects the total potential of the plurality of secondary battery cells 1. In the example of FIG. 6, the total potential connection regions 42B are disposed at corners of the circuit board 40, and the intermediate potential connection regions 42A are disposed in the middle while being spaced apart from each other.

### (Slide-in Structure)

The circuit board 40 is disposed on the upper face of the battery storage unit 21 of the battery holder 20. The battery holder 20 includes an attachment unit 24 that guides the circuit board 40 to the slot 28 while enabling at least one edge of the circuit board 40 to be pressed thereto. By inserting the circuit board 40 into the slot 28 in this way to form a slide-in structure in which an edge of the circuit board 40 is pressed against the attachment unit 24, as shown in the cross-sectional view of FIG. 5, the circuit board 40 can be easily positioned relative to the battery holder 20. As a result, the electrical connection between the lead plate 30 and the circuit board 40 can be easily performed.

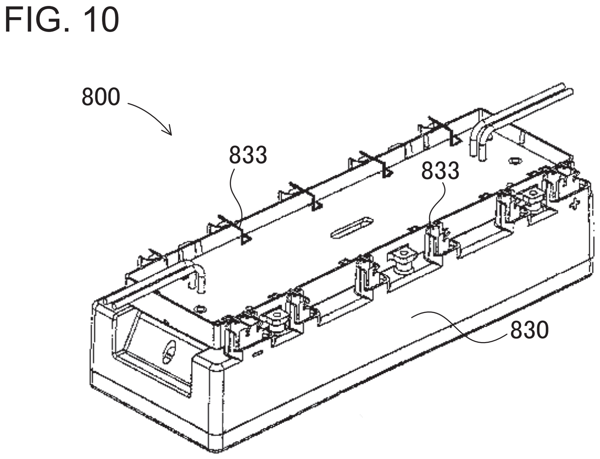

In a battery pack including a plurality of secondary battery cells, it is necessary to detect not only the total voltage of the electric assembly of the stacked secondary battery cells, but also the intermediate potential. For this reason, each lead plate is electrically connected to the circuit board to detect the potential at each portion. Generally, in a battery pack, lead plates are disposed on both side faces of the battery holder, and the circuit board is secured to the upper face of the battery holder. The lead plates on the side faces and the circuit board are connected by lead plates, lead pins, lead wires, or the like. For example, in a battery pack 800 according to a comparative example shown in FIG. 10, a lead pin 833 is engaged with and connected to the upper face of each lead plate 830 in order to measure the intermediate potential present on the lead plate 830. In this configuration, it is necessary to manually perform the operation of engaging the tip end of the lead pin 833 with the lead plate 830, which is cumbersome.

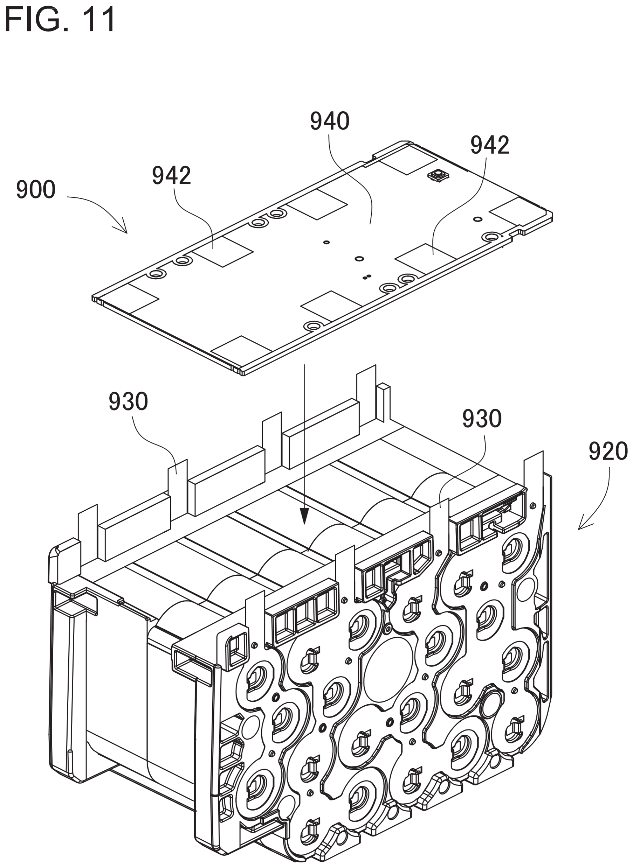

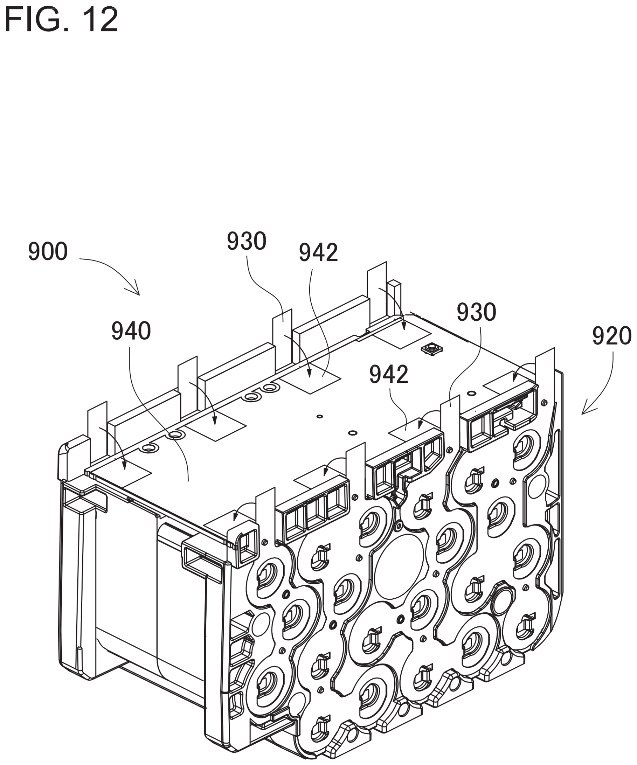

Further, in a battery pack 900 according to another comparative example shown in FIG. 11, a circuit board 940 is secured to the upper face of a battery holder 920 by screwing or the like, with the tip end of each lead plate 930 standing upright. Then, as shown in FIG. 12, the tip end of each lead plate 930 is manually bent to be overlapped with an electrical connection region 942 provided on the circuit board 40, and secured thereto by welding or the like. This method also requires a step of manually bending the upper end of the lead plate 930, and is thus cumbersome for the same reason. Further, although not shown in the figures, there is also a configuration in which the upper end of each lead plate is connected to the circuit board by lead wires. However, this configuration also requires welding of the lead wires to the circuit board and the lead plates, which increases the number of steps. In addition, since a certain length is necessary for the lead wires for routing the lead wires, for example, a mechanism for suppressing flapping of the lead wires is also required. This makes the structure more complicated.

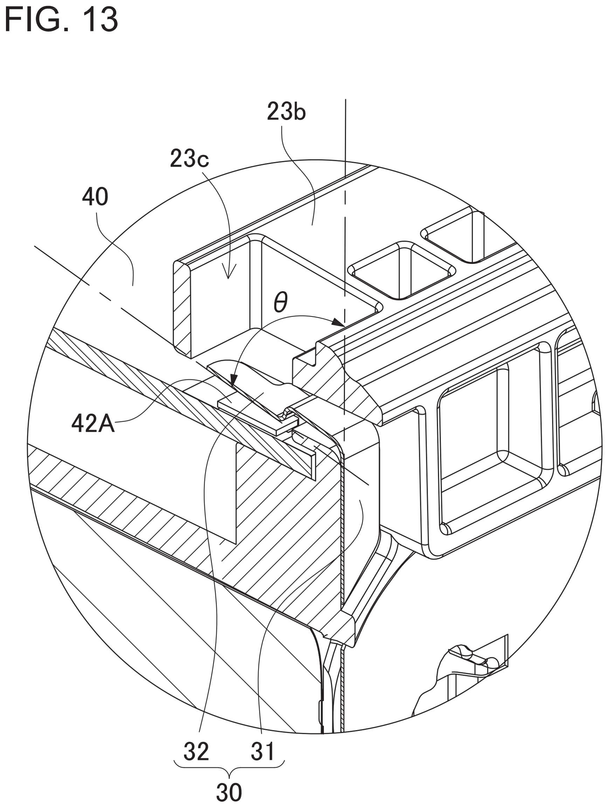

On the other hand, the battery pack 100 according to the present embodiment has a slide-in structure in which the circuit board 40 is not mounted from the upper face of the battery holder 20, but is inserted into the slot 28 from the side faces, as shown in the exploded perspective view of FIG. 6. With this configuration, as shown in the perspective view of FIG. 13, the lead plate 30 can be bent in advance, thereby omitting the manual bending step of the lead plate 30. This results in the advantage of reducing the number of steps. Further, by enabling setting of the relative positions between the circuit board 40 and the battery holder 20 by pressing the edge of the circuit board 40 to the attachment unit 24, the positioning between the bending piece 32 of each lead plate 30 and each electrical connection region 42 of the circuit board 40 can also be achieved, thereby facilitating the connection work such as welding. That is, by securing the circuit board 40 to the battery holder 20, the positioning can be simultaneously achieved.

Further, this configuration also provides the advantage of easy setting of the order of connecting the electrical connection regions 42. In a configuration for measuring intermediate potentials, the voltage tolerance of the terminals for detecting the intermediate potentials in the protection circuit or the like mounted on the circuit board 40 is designed according to the expected voltage. However, during the assembly, an unexpectedly high voltage may be applied depending on the connection state with other electrical connection regions 42. To avoid such an event, the electrical connection needs to be established starting from the ground side, i.e., the total potential connection region 42B at the low-voltage side, then the intermediate potential connection regions 42A from lower to higher voltages, and finally the total voltage, i.e., the total potential connection region 42B at the high-voltage side. In the battery pack 100 according to the present embodiment, this connection order can also be easily regulated by performing welding by bringing the bending pieces 32 of the lead plates 30 into a contact state with a jig in a predetermined order, thereby providing the advantage of easy control of connection order. The "jig" used herein includes connecting tools. Examples of adoptable configurations include a configuration in which the bending pieces are pressed by a pressing jig having a bar shape or the like while applying a separate welding bar for resistance welding, or a configuration in which welding is performed by directly pressing the bending pieces by the welding bar itself. In the present specification, such tools used in the connection process are collectively referred to as a jig.

Further, with the slide-in structure, the positioning can be more easily performed while directly mounting the electronic components 50 such as the LED 50A and the switch 50B on the circuit board 40. In particular, in the battery pack 100 according to Embodiment 1, as shown in FIGs. 5, 7, etc., the electronic components 50 such as the LED 50A and the switch 50B, which are required to be visible or operable from outside of the outer case 10, are directly mounted on the circuit board 40 without using sub-holders such as LED holders or parts holders. In addition, by attaching the circuit board 40 on which such electronic components 50 are mounted to the battery holder 20 using a slide-in structure, all components are already positioned and secured in the fixed positions, and therefore it is sufficient to perform positioning only between the battery holder 20 and the outer case 10, thereby reducing the positioning workload. Furthermore, since sub-holders are not used, the processes of mounting the electronic components 50 on the sub-holders and mounting the sub-holders on the circuit board 40 can be omitted, thereby reducing production costs in addition to saving on the cost of sub-holder components.

### (Guide Wall 23)

The slot 28 for implementing the slide-in structure is formed on the upper face of the battery holder 20 and includes a pair of guide walls 23 that guides both side faces of the circuit board 40 intersecting one edge of the circuit board 40. In the example shown in FIG. 6, the guide walls 23 include guides L 23b, each of which is bent in an L-shape from the side face of the battery holder 20 toward the inside thereof, on the upper face of the battery storage unit 21, so as to guide both sides of the circuit board 40. By guiding the edges on both sides of the circuit board 40 with the pair of guide walls 23 in this way, the circuit board 40 can be guided along the slot 28. Further, with the circuit board 40 attached to the upper face of the battery storage unit 21 by the attachment unit 24, the other edge opposite to this edge of the circuit board 40 is exposed.

The guide walls 23 are formed integrally with the battery holder 20. However, the guide walls may also be configured using members separated from the battery holder, and the guide walls may be secured to the upper face of the battery holder.

### (Lead Window 23c)

Further, as shown in FIG. 13, etc., a lead window 23c is opened in the guide L 23b to expose the bending piece 32. With this configuration, the bending piece 32 of each lead plate 30 can be exposed through the lead window 23c with the circuit board 40 inserted into the slot 28, allowing a securing operation such as welding to be performed on the electrical connection region 42.

### (Bending Piece 32)

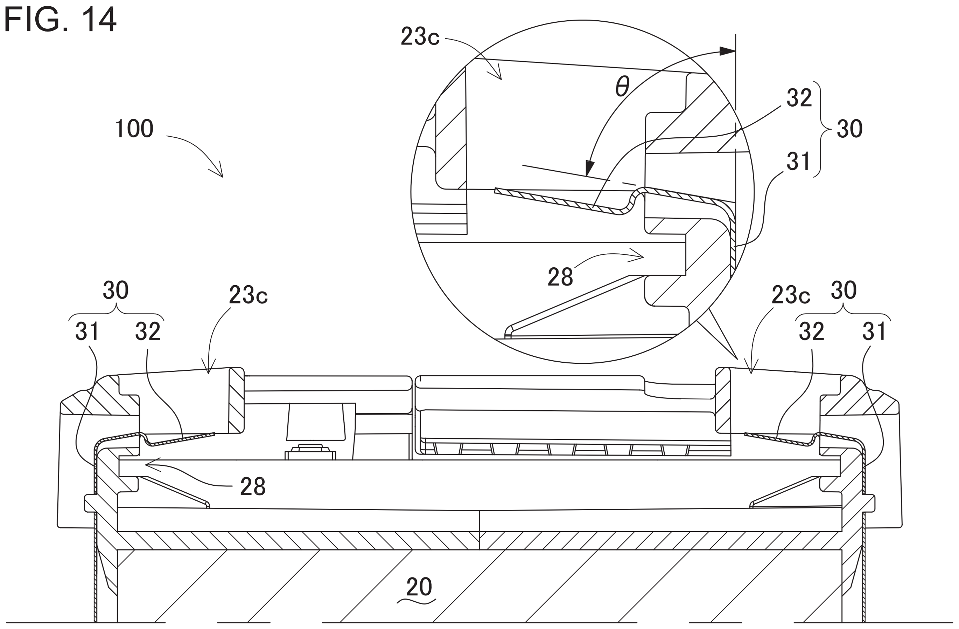

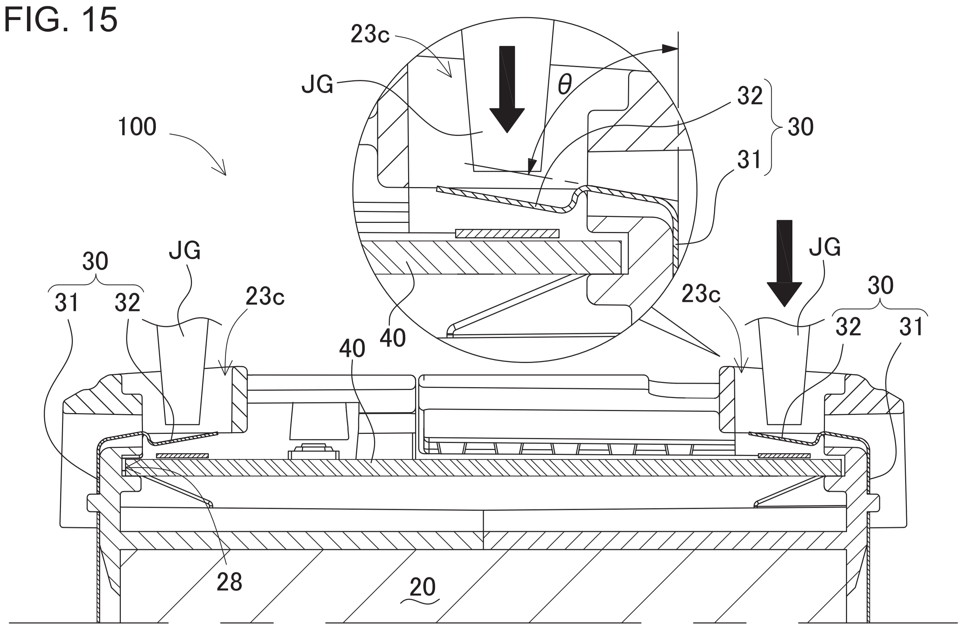

The bending piece 32 of each lead plate 30 is preferably bent elastically from the covering face 31. This allows, after the circuit board 40 is inserted into the slot 28 as shown in the cross-sectional view of FIG. 14, the bending piece 32 to be pressed toward the electrical connection region 42 from above using a jig JG, or the like, as shown in the cross-sectional view of FIG. 15, allowing welding or weld bonding to be performed on the bending piece 32 that is in contact with the electrical connection region 42 by elastic deformation without a gap.

A bending angle θ of the bending piece 32 of each lead plate 30 is set so that the bending piece 32 does not interfere with the insertion of the circuit board 40 into the slit when the circuit board 40 is inserted into the slot 28. The bending angle θ of the bending piece 32 with respect to the covering face 31 is not more than 90°, and preferably 70° to 90° in consideration of production tolerances and the like. This enables the lead plate 30 to be more easily pressed to the electrical connection region 42 of the circuit board 40 in a state where the circuit board 40 is inserted along the guide walls 23 and attached to the battery holder 20. The smaller the bending angle θ, the larger the stroke quantity in pressing the bending piece 32 toward the electrical connection region 42. Therefore, to reduce the stroke quantity to bend the bending piece 32 during welding, the bending angle θ is preferably not overly small, and more preferably about 80°.

### [Embodiment 2]

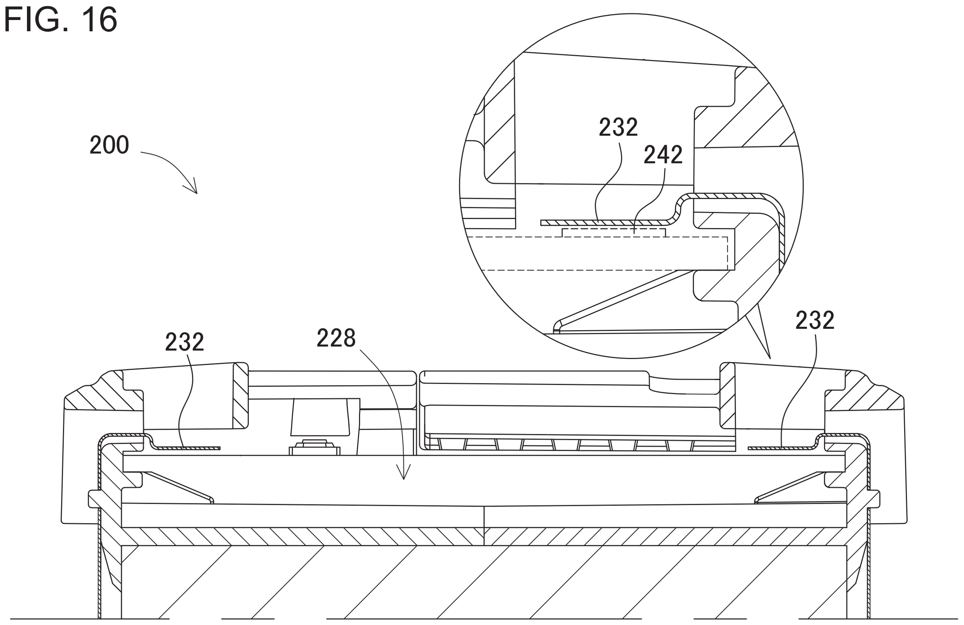

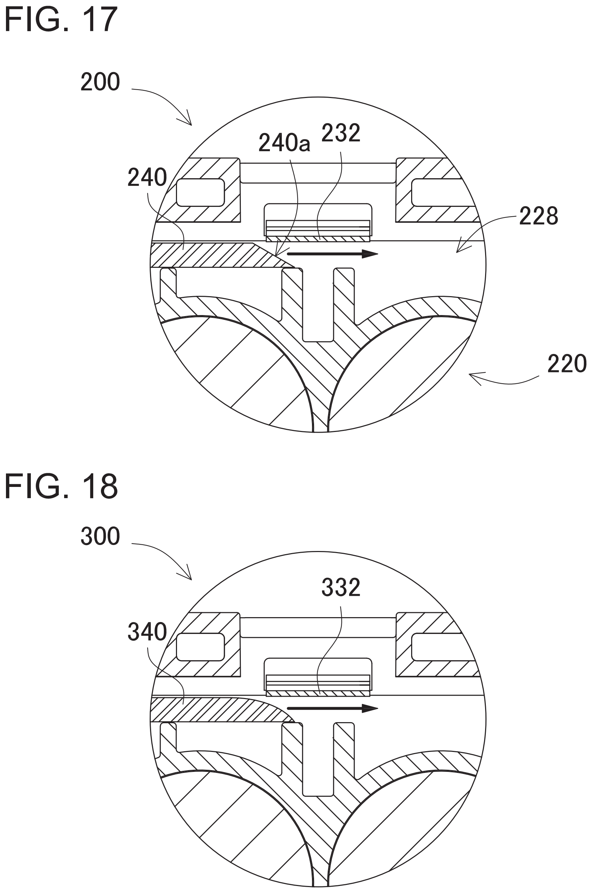

On the other hand, the bending angle θ of the bending piece 32 may be set to 90° or greater. This provides the advantage that the pressing operation using a jig during welding of the bending piece 32 can be reduced or even eliminated. Such an example is described below based on a battery pack 200 according to Embodiment 2 shown in FIGs. 16 and 17. Among these drawings, FIG. 16 is a horizontal cross-sectional view of the battery pack 200 according to Embodiment 2, and FIG. 17 is a vertical cross-sectional view showing a state in which a circuit board 240 of the battery pack 200 of FIG. 16 is inserted into a slot 228 of a battery holder 220. In the figures, the same members as those described above in Embodiment 1 are given the same reference numbers and detailed descriptions are omitted as appropriate. In the battery pack 200 according to Embodiment 2, a bending angle θ' of a bending piece 232 is set to 90° or greater, as shown in FIG. 16. As a result, when the circuit board 240 is inserted into the slot 228, there is a possibility that the bending piece 232 comes in the way and interferes with the insertion of the circuit board 240. Therefore, as shown in FIG. 17, the edge of the circuit board 240 is formed into an inclined face 240a that slopes from the upper face toward the lower face. With this configuration, when the circuit board 240 is inserted into the slot 228, the bending piece 232, which is in contact with the inclined face 240a at the tip end, elastically deforms as if it is lifted from below. Thus, even if the bending piece is bent at an angle of 90° or greater, it does not interfere with the insertion of the circuit board 240 into the slot 228. This enables the circuit board 240 to be inserted into the slot 228. Further, after the insertion, since the bending piece 232 is in contact with an electrical connection region 242, the amount of pressing by a jig during welding or weld bonding can be reduced or even the pressing operation itself can be omitted.

Further, as in a battery pack 300 according to a modification example shown in FIG. 18, the end face of a circuit board 340 may be chamfered in a curved shape from the upper face toward the lower face, so that the end face of the circuit board 340 can more smoothly slide in from the lower face of the bending piece 332 and push it up from below.

### (Attachment Unit 24)

The attachment unit 24 is disposed on the back side of the upper face of the battery holder 20. The attachment unit 24 is attached to at least one edge of the circuit board 40. In the examples of FIGs. 5 and 6, the right edge of the circuit board 40 is pressed into and brought into contact with the attachment unit 24, thereby positioning the circuit board 40 in the longitudinal direction. Further, the positioning of the circuit board 40 in the width direction is made by the pair of guide walls 23, thereby achieving positioning in the XY plane. With the circuit board 40 positioned relative to the battery holder 20, the circuit board 40 is screwed and secured to the battery holder 20, as shown in FIG. 6.

As shown in the cross-sectional view of FIG. 5 with an enlarged view of a main portion, the attachment unit 24 is formed in an eave shape that covers the edge to a part of the upper face of the circuit board 40 in the state where the circuit board 40 is placed on the upper face of the battery storage unit 21. With this configuration, the circuit board 40 can be held with its edge caught under the eave-shaped attachment unit 24. The attachment unit 24 can also be formed integrally with the battery storage unit 21.

### (Linking Unit 26)

Further, the battery holder 20 includes a linking unit 26 that links the electronic components 50 with the outer case 10 in the state where the circuit board 40 is attached to the attachment unit 24. As described above, by accurately positioning the circuit board 40 and the battery holder 20, the electronic components 50 directly mounted on the circuit board 40 can be linked with the outer case 10 without using the sub-holders such as the LED holders or the parts holders for holding the electronic components 50. In other words, whereas, conventionally, it was necessary to mount the sub-holders on the circuit board 40 and then mount the circuit board 40 on the battery holder 20, in the battery pack 100 according to Embodiment 1, the linking between the electronic components 50 and the outer case 10 is achieved solely by mounting the circuit board 40 on the battery holder 20, using the linking unit 26 incorporated in the battery holder 20.

### (Holder Opening Window 26A)

Such a linking unit 26 can be formed as a part of the connection part. For example, when the electronic components 50 are a plurality of LEDs 50A, the linking unit 26 may be provided as a plurality of holder opening windows 26A that are individually opened so that each of the plurality of LED 50A is exposed from the battery holder 20 in the state where the circuit board 40 is attached to the attachment unit 24. As shown in FIG. 5, the holder opening window 26A is opened in a projection 25 that projects in the shape of an eave and constitutes the connection part of the battery holder 20. As shown in FIG. 9, the holder opening windows 26A, whose number corresponding to the number of LEDs 50A, i.e., the electronic components 50, are individually opened in positions corresponding to the LEDs 50A respectively mounted on the circuit board 40. By individually forming the holder opening windows 26A for respective LEDs 50A in this way, the separation visibility among the respective LEDs 50A can be improved. Further, in order to improve the separation visibility, the projection 25 in which each holder opening window 26A is formed may be black or given light-absorbing properties. In addition, the inner face of each opening window is formed as an inclined face 27 to facilitate reflection of the light emitted by each LED 50A and extraction of the light to the outside. Further, the inclined face 27 may be coated with a reflective film that reflects light to improve the efficiency of light extraction.

On the other hand, the outer case 10 that stores the battery holder 20 is provided, as shown in FIG. 9, etc., with case opening windows 14 in positions corresponding to the respective holder opening windows 26A. Accordingly, the user can visually confirm the lighting of the LEDs 50A from outside of the outer case 10.

### (Holder Operation Unit 26B)

The electronic component 50 is not limited to the LED 50A, and other members may also be used. For example, in the example of FIG. 9, the switch 50B is provided in addition to the plurality of LEDs 50A as battery components. In this case, the linking unit 26 serves as the holder operation unit 26B that is disposed in a position corresponding to the switch 50B in the state where the circuit board 40 is attached to the attachment unit 24. The holder operation unit 26B is operable in coordination with the switch 50B. For example, when the switch 50B is a push button, pressing the holder operation unit 26B from the upper face causes its back side to come into contact with the switch 50B to operate the switch 50B.

Further, the outer case 10 includes the case operation unit 15 at a position corresponding to the holder operation unit 26B. The case operation unit 15 is operable in coordination with the holder operation unit 26B. Accordingly, when the user operates the case operation unit 15 of the outer case 10, the bask side of the case operation unit 15 comes into contact with the holder operation unit 26B, thereby causing the holder operation unit 26B to operate the switch 50B. In this manner, the user can operate the switch 50B from outside of the outer case 10 through the holder operation unit 26B.

The case opening windows 14 and the case operation unit 15 of the outer case 10 are preferably disposed to be adjacent to each other. In the example shown in FIG. 2, the case opening windows 14 and the case operation unit 15 are disposed so that they are adjacent to each other within an operation region 16 provided on the upper portion of the surface of the outer case 10. Further, a seal 17 is adhered to the operation region 16. The case opening windows 14 are visible from outside through the seal 17. For example, light emitted from an LED disposed in the holder opening window 26A can be visually confirmed from outside through the seal 17. The case operation unit 15 is also operable through the seal 17. For example, the switch 50B disposed on the back side of the case operation unit 15 can be operated by pressing the case operation unit 15 through the seal 17.

In such a configuration in which the seal 17 is adhered to the operation region 16, a cut or notch may be provided in the seal 17. For example, a notch may be formed in the seal 17 to expose the case opening windows 14 or the case operation unit 15 from the seal 17. Also, a cut may be made along the outline corresponding to the case operation unit 15 to allow the seal 17 to more easily follow the movement of the case operation unit 15, such as when it is pressed or released. Alternatively, although the plurality of holder opening windows 26A are provided in the battery holder 20 and the plurality of case opening windows 14 are correspondingly provided in the outer case 10 in the example of FIG. 2, it is also possible to form a single, larger case opening window 14 to expose the plurality of holder opening windows 26A together while opening a plurality of seal opening windows corresponding to the holder opening windows 26A in the seal 17.

In the example of FIG. 7, divided holders 22A and 22B that constitute the battery holder 20 are asymmetrically disposed, with the holder opening window 26A provided on the divided holder 22A and the holder operation unit 26B provided on the divided holder 22B. However, the layout of the linking unit is not limited to this configuration, and any suitable layout may be employed, such as providing both the holder opening window and the holder operation unit on one of the divided holders.

### (Production method for Battery Pack)

A production method for the battery pack 100 described above includes a step of securing the covering face 31 of each of the plurality of lead plates 30 to a pair of assembly side faces 3 of the battery assembly 2 in which the plurality of secondary battery cells 1 stored in the battery holder 20 are stacked, the pair of assembly side faces 3 respectively exposing end faces of the plurality of secondary battery cells 1 on the same plane, a step of inserting the circuit board 40 into the slot 28, which is formed on one face of the battery holder 20 and allows a pair of side faces of the circuit board 40 to be guided by the guide walls 23 to be slidable, and bringing the bending pieces 32 of the lead plates 30 to face the plurality of electrical connection regions 42, and a step of connecting each of the bending pieces 32 to each of the battery connection regions. With this method in which the bending piece 32 of each lead plate 30 can be secured to each electrical connection region 42 by inserting the circuit board 40 into the slot 28 with the bending piece 32 bent in advance, it is possible to perform easy electrical connection between the lead plate 30 and the circuit board 40. Further, the step of inserting the circuit board 40 into the slot 28 and bringing the bending pieces 32 to face the plurality of electrical connection regions 42 may include a step of bringing an edge of the circuit board 40 into contact with the attachment unit 24, which is disposed to intersect the pair of guide walls 23, to perform relative positioning of the circuit board 40 and the battery holder 20 so that the electrical connection regions 42 and the bending pieces 32 are disposed in an overlapping manner. This method makes it possible to easily perform positioning of the circuit board 40 and the battery holder 20 so that the bending piece 32 and the electrical connection region 42 are disposed in an overlapping manner. Further, in the step of inserting the circuit board 40 between the pair of guide walls 23, upper ends of the plurality of lead plates 30 are elastically bent above a path along which the circuit board 40 is inserted between the pair of guide walls 23, and, in the step of electrically connecting the plurality of electrical connection regions 42 and the lead plates 30 that are disposed in the overlapping manner, the upper ends of the lead plates 30 may be pressed to the respective electrical connection regions 42 with a jig. This allows each lead plate 30 to be easily electrically connected to the circuit board 40.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a casing of an electrical device. In the present disclosure, a battery pack simply refers to those in which, at least, secondary battery cells are stored in a case. Therefore, a configuration with built-in secondary battery cells for driving an electrical device stored in a casing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack and the production method for the battery pack according to the present disclosure can be suitably used for a power source for driving an assist bicycle, or a power source for driving self-propelled robots for home delivery, electric carts for home delivery and golf courses, electric scooters, construction machinery, as well as vehicles such as hybrid vehicles and electric vehicles. In addition, they can also be suitably be used for a power source for portable electrical devices such as radios, electric cleaners, and power tools, as well as stationary energy storage applications such as a backup power source for servers or a power supply for households, business establishments, and factories.

**REFERENCE SIGNS LIST**

| | | | | | |
|---|---|---|---|---|---|
| 100 | battery pack | | | | |
| 1 | secondary battery cell | | | | |
| 2 | battery assembly | | | | |
| 3 | assembly side face | | | | |
| 10 | outer case | | | | |
| 11 | upper case | | | | |
| 12 | lower case | | | | |
| 13 | handle | | | | |
| 14 | case opening window | | | | |
| 15 | case operation unit | | | | |
| 16 | operation region | | | | |
| 17 | seal | | | | |
| 20 | battery holder | | | | |
| 21 | battery storage unit | | | | |
| 22A, 22B | divided case | | | | |
| 23 | guide wall; | 23b | guide L; | 23c | lead window |
| 24 | attachment unit | | | | |
| 25 | projection | | | | |
| 26 | linking unit; | 26A | holder opening window; | 26B | holder operation unit |
| 27 | inclined face | | | | |
| 28 | slot | | | | |
| 30 | lead plate | | | | |
| 31 | covering face | | | | |
| 32 | bending piece | | | | |
| 40 | circuit board | | | | |
| 42 | electrical connection region; | 42A | intermediate potential connection region; | | |
| 42B | total potential connection region | | | | |
| 50 | electronic component; | 50A | LED | 50B | switch |
| 200 | battery pack | | | | |
| 220 | circuit board | | | | |
| 228 | slot | | | | |
| 232 | bending piece | | | | |
| 240 | circuit board | 240a | inclined face | | |
| 242 | electrical connection region | | | | |
| 300 | battery pack | | | | |
| 332 | bending piece | | | | |
| 340 | circuit board | | | | |
| 800 | battery pack | | | | |
| 830 | lead plate | | | | |
| 833 | lead pin | | | | |
| 900 | battery pack | | | | |
| 920 | battery holder | | | | |
| 942 | electrical connection region | | | | |
| JG | jig | | | | |
| θ, θ' | bending angle | | | | |

## Claims

1. A battery pack comprising:
a plurality of secondary battery cells;
a plurality of lead plates that connect the plurality of secondary battery cells in series and/or in parallel;
a battery holder that holds the plurality of secondary battery cells and the plurality of lead plates;
a circuit board having a rectangular shape with a pair of edges and a pair of side faces intersecting the pair of edges, the circuit board including a plurality of electrical connection regions for respectively connecting to the plurality of lead plates; and
a pair of guide walls, which is disposed on one face of the battery holder and forms a slot in which the circuit board is inserted by respectively guiding the pair of side faces of the circuit board,
wherein
each of the plurality of lead plates includes a bending piece that is to be bent and connected to each of the electrical connection regions of the circuit board, and
the bending piece is connected to each of the plurality of electrical connection regions in a state where the circuit board is inserted into the slot to electrically connect the plurality of lead plates to the circuit board.

2. The battery pack as recited in claim 1, wherein
each of the plurality of secondary battery cells has a cylindrical shape with different electrodes on a pair of end faces,
each of the plurality of lead plates includes a covering face that partially covers a pair of assembly side faces of a battery assembly in which the plurality of secondary battery cells are stacked, the pair of assembly side faces respectively exposing end faces of the plurality of secondary battery cells on the same plane,
the bending piece is bent from the covering face to be exposed, and
the bending piece is connected to each of the electrical connection regions of the circuit board.

3. The battery pack as recited in claim 2, wherein
the battery holder comprises a battery storage unit that stores the plurality of secondary battery cells, and
the circuit board is attached to an upper face of the battery storage unit.

4. The battery pack as recited in claim 2, wherein the guide walls are formed integrally with the battery holder.

5. The battery pack as recited in claim 2, wherein
each of the guide walls includes a guide L formed in an L-shape so as to cover from a pair of side faces to an upper face of the circuit board, and
a lead window is opened in the guide L to expose the bending piece.

6. The battery pack as recited in claim 3, further comprising
an attachment unit that covers another edge of the circuit board in a state where the circuit board is inserted into the slot.

7. The battery pack as recited in claim 6, wherein
the attachment unit is formed into an eave shape projecting to the upper face of the battery storage unit, and
the circuit board is configured such that the attachment unit having the eave shape covers the another edge to a part of the upper face of the circuit board in a state where the circuit board is inserted into the slot.

8. The battery pack as recited in any one of claims 2 to 7, wherein the bending piece of each of the lead plates is bent elastically from the covering face.

9. The battery pack as recited in claim 8, wherein the bending piece of each of the lead plates is bent at an angle of 70° to 90° with respect to the covering face.

10. The battery pack as recited in claim 1, wherein
each of the plurality of electrical connection regions comprises:
an intermediate potential connection region, which is connected to one of the plurality of lead plates and detects an intermediate potential of the plurality of secondary battery cells; and
a total potential connection region, which is connected to another one of the plurality of lead plates and detects a total potential of the plurality of secondary battery cells.

11. A production method for a battery pack,
the battery pack comprising:
a plurality of secondary battery cells;
a plurality of lead plates that connect the plurality of secondary battery cells in series and/or in parallel, the plurality of lead plates including bending pieces that are bent in advance;
a battery holder that holds the plurality of secondary battery cells and the plurality of lead plates; and
a circuit board having a rectangular shape with a pair of edges and a pair of side faces intersecting the pair of edges, the circuit board including a plurality of electrical connection regions for respectively connecting to the plurality of lead plates,
the method comprising:
a step of securing a covering face of each of the plurality of lead plates to a pair of assembly side faces of a battery assembly in which the plurality of secondary battery cells stored in the battery holder are stacked, the pair of assembly side faces respectively exposing end faces of the plurality of secondary battery cells on the same plane;
a step of inserting the circuit board into a slot, which is formed on one face of the battery holder and allows the pair of side faces of the circuit board to be guided by guide walls to be slidable, and bringing the bending pieces of the lead plates to face the plurality of electrical connection regions; and
a step of connecting each of the bending pieces to each of the battery connection regions.

12. The production method for a battery pack as recited in claim 11, wherein
the step of inserting the circuit board into the slot and bringing the bending pieces to face the plurality of electrical connection regions comprises:
a step of bringing an edge of the circuit board into contact with an attachment unit, which is disposed to intersect the pair of guide walls, to perform relative positioning of the circuit board and the battery holder so that the electrical connection regions and the bending pieces are disposed in an overlapping manner.

13. The production method for a battery pack as recited in claim 12, wherein,
in the step of inserting the circuit board between the pair of guide walls, upper ends of the plurality of lead plates are elastically bent above a path along which the circuit board is inserted between the pair of guide walls, and,
in the step of electrically connecting the plurality of electrical connection regions and the lead plates that are disposed in the overlapping manner, the upper ends of the lead plates are pressed to the respective electrical connection regions with a jig.

14. The production method for a battery pack as recited in any one of claims 11 to 13, wherein
each of the bending pieces of the lead plates is bent at an angle of 70° to 90° with respect to the covering face.
